# EUROPEAN PATENT SPECIFICATION

(11) **EP 4 464 923 B1**
(45) Date of publication and mention of the grant of the patent: **11.02.2026**
(21) Application number: 24170866.8
(22) Date of filing: 17.04.2024
(51) Int. Cl.: F16L 41/06

(54) **METALLIC TAPPING TEE**
METALLISCHES T-STÜCK
TAPOTAGE MÉTALLIQUE

(30) Priority: 15.05.2023 GB 202307217
(43) Date of publication of application: 20.11.2024
(73) Proprietor: Radius Systems Limited, South Normanton Derbyshire DE55 2JJ (GB)
(72) Inventor: ALLWOOD, Laurence, Derbyshire, DE55 2JJ (GB)
(74) Representative: HGF

(56) References cited:
- EP-A2- 2 154 410
- DE-A1- 2 431 741
- GB-A- 1 350 321

## Description

### TECHNICAL FIELD

The present disclosure relates to a tapping tee saddle. Aspects of the invention relate to a tapping tee, and a method of attaching a tapping tee to a pipe.

### BACKGROUND

Fluid distribution networks, such as water, gas, or oil pipelines, are essential for supplying various resources to residential, commercial, and industrial areas. In these networks, tapping tees are commonly used to create a secondary flow pathway, allowing for the diversion of fluid from the primary pipeline. Tapping tees are typically installed at specific locations along the pipeline to enable connections to auxiliary pipelines or to provide access points for maintenance and monitoring operations.

Existing tapping tees in the market are typically designed to accommodate specific pipe diameters, necessitating the use of different tapping tees for pipelines of varying sizes. This limitation presents challenges in inventory management, as utility companies and installation crews must maintain a stock of multiple tapping tee sizes to accommodate different pipeline diameters. Additionally, the need to replace or upgrade an existing tapping tee in the field may require considerable time and resources if a suitable replacement is not readily available. EP2154410A2 relates to a clamping collar, corresponding tubular connection and clamping assembly. DE2431741A1 relates to a pipe branch connector attachment.

There is, therefore, a need for an improved tapping tee design that can address these limitations and provide a more versatile and reliable solution for fluid distribution networks. The present invention seeks to fulfil this need and provides further related advantages, as described in the following summary and detailed description of the preferred embodiments.

### BRIEF SUMMARY

In accordance with an aspect of the present invention there is provided a tapping tee saddle comprising: a saddle body comprising a seat; and an attachment mechanism, the attachment mechanism comprising: a strap attached to said saddle body; a pin comprising a slot, the slot constructed to accept the strap, wherein said pin can rotate relative to said saddle body.

The present invention provides a tapping tee saddle that is designed to accommodate a variety of pipe diameters, offering significant advantages over conventional tapping tees. These advantages include increased versatility, reduced inventory requirements reduced install time, and cost savings, all of which contribute to the overall efficiency and reliability of fluid distribution networks.

By providing a tapping tee capable of fitting different pipe diameters, the need to maintain a stock of multiple sizes of tapping tees is greatly reduced, simplifying inventory management for utility companies and installation crews. This versatility also facilitates quicker and more efficient replacement or upgrading of existing tapping tees in the field, as a single tapping tee design can be utilized across a broader range of pipeline sizes, such as being able to fit pipes from 63 - 180mm in diameter. Additionally, the versatility of the attachment mechanism of the present invention ensures a secure and leak-free connection between the tapping tee and pipelines of varying diameters, materials, and operating conditions. This results in enhanced performance, reduced maintenance costs, minimized resource waste, and decreased potential for environmental hazards.

These benefits are achieved by providing a strap which fits around the pipe which the tapping tee is to be applied to, the strap fits through a slot provided in the pin which is attached to the tapping tee saddle. The strap can be provided with excess length, such that the tapping tee saddle accommodates pipes from 63-180mm in diameter. Subsequently rotating the pin comprising a slot brings tension to the strap and creates a tight pipe-saddle connection, allowing the operative to easily attach the tapping tee saddle to the pipe, using their hands and, if preferred, a tool to rotate the pin comprising a slot and tension the strap.

In summary, the present invention offers a tapping tee with a superior design that addresses the limitations of conventional tapping tees. By accommodating a broad range of pipe diameters, and providing an improved fitting and tightening method, the tapping tee of the present invention delivers greater versatility, easier fitting, streamlined inventory management, and improved sealing performance, ultimately leading to cost savings and increased reliability within fluid distribution networks.

In an example, the seat is curved for fitting to a cylindrical pipe.

The present invention features a curved seat, providing a superior sealing surface for pipes of various diameter. This design enhancement ensures a versatile, less time consuming connection, reducing maintenance costs, resource waste, and environmental hazards associated with fluid distribution networks.

In an example, the strap is formed of metal.

The use of metals like steel or stainless steel in strap offers increased durability, corrosion resistance, and a longer service life. These materials are capable of withstanding harsh environments, resulting in a more reliable and robust tapping tee that requires less frequent replacement or maintenance.

In an example, the pin can only be rotated in one direction.

By only allowing the pin comprising a slot to rotate in one direction, the method of attaching the tapping tee saddle to a pipe is simplified, because the step of rotating the pin comprising a slot can only be performed one way, additionally as the pin comprising a slot is tuned, it cannot slip back in the wrong direction maintaining tension in the strap.

In an example, the pin further comprises a head configured to be manipulated by a tool.

By incorporating a head that can be manipulated by a tool, the present invention provides a user-friendly design that simplifies the installation, adjustment, and maintenance of the tapping tee. This feature allows for faster and more efficient operations in the field, reducing downtime and labour costs associated with tapping tee installation and servicing.

In an example, the pin is attached to a one way clutch.

In an example, the one way clutch is a needle clutch bearing.

In an example, the attachment mechanism comprises a torque indicator which indicates the amount of force applied to said strap.

In an example, the attachment mechanism comprises a marking to denote how far to pull the strap through said pin.

Incorporating a torque indicator or a marking to denote how much of the strap to feed into the pin allows for precise torque control during installation and maintenance procedures. This feature ensures optimal sealing performance by preventing over-tightening or under-tightening of the tapping tee components, reducing the potential for leaks, maintenance issues, and damage to the pipeline or tapping tee itself.

In an example, the tapping saddle further comprises a curved adaptor configured to attach to said seat, wherein said curved adapter has a smaller radius of curvature than said seat.

In accordance with an aspect of the present invention there is provided a tapping tee comprising the tapping tee saddle described above, the tapping tee comprising: a gasket attached to said seat, a branch connection.

The tapping tee further comprises a captive cutter.

In an example, the tapping tee further comprises a guide hole for a hex tool.

In accordance with an aspect of the present invention there is provided a method of installing a tapping tee to a pipe, the method comprising: providing a tapping tee as described above; placing the seat onto the pipe; arranging said strap about said pipe and inserting an end of said strap into said slot of the pin comprising a slot; rotating said pin such that the tension of the strap increases.

In an example, the method further comprises cutting into said pipe to form a fluid connection between said pipe and said branch connection.

In an example, said pipe is a barrier pipe.

In an example, the method includes locking the pin comprising a slot such that it cannot rotate.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced. The accompanying drawings, which are included to provide a further understanding of the invention and are incorporated in and constitute a part of this specification, illustrate embodiments of the invention and, together with the description, serve to explain the principles of the invention. In the drawings:
FIG. 1 illustrates an isometric view of a tapping tee;
FIG. 2 illustrates a cut away portion of the tapping tee;
FIG. 3 illustrates further view of the tapping tee.

### DETAILED DESCRIPTION

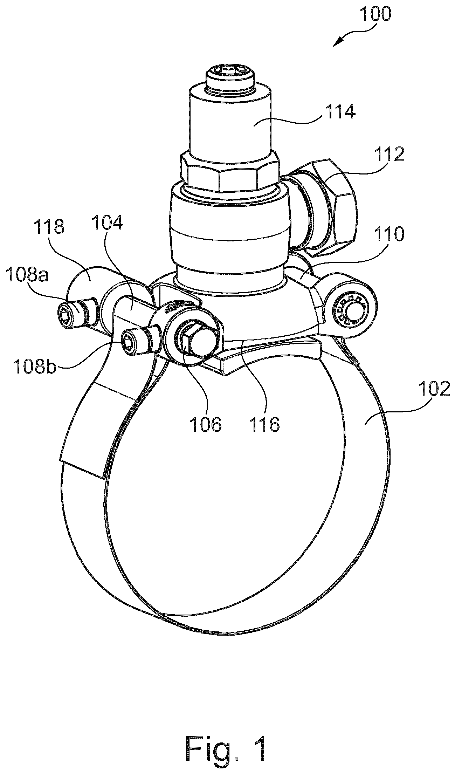

Figure 1 illustrates an isometric view of the tapping tee 100, showcasing the overall design and the arrangement of its various components. The tapping tee includes a tapping tee saddle which comprises a saddle body 116 and an attachment mechanism. The tapping tee 100 is constructed to attach to a pipe, especially a barrier pipe creating a branch line via branch connection 112. A tapping tee 100 is a specialized fitting used in piping systems to create a branch connection from a main pipe without interrupting the flow of fluid or gas within it. This type of fitting is commonly used in water, gas, and oil pipelines, as well as in various industrial processes. It allows for the addition of new connections, maintenance, or modifications to existing lines with minimal disruption to the system.

A barrier pipe refers to a type of piping system designed to prevent the permeation or migration of contaminants, such as chemicals or hydrocarbons, into the contents of the pipe. Barrier pipes are commonly used in water supply systems, gas distribution networks, and contaminated land remediation projects, where there is a need to protect the fluid or gas being transported from external contamination or to prevent the contamination of the surrounding environment by the transported medium.

Barrier pipes are typically constructed using a multi-layered structure. The layers often include: Inner layer: This layer is usually made from a material with good chemical resistance and low permeability, such as polyethylene (PE), polyvinyl chloride (PVC), or polypropylene (PP). This layer provides the primary barrier against the permeation of contaminants. Barrier layer: This layer serves as the key barrier against contaminants and can be made from materials such as aluminium. The barrier layer is responsible for preventing the ingress of contaminants or the escape of substances within the pipe. Outer layer: The outer layer is generally made from a material similar to the inner layer and provides protection against mechanical damage, UV degradation, and other environmental factors. The layers in a barrier pipe can be bonded together through various methods, such as co-extrusion, lamination, or adhesive bonding, to create a single, robust pipe structure that effectively resists permeation by contaminants. Barrier pipes are more robust than some other forms of pipe which consist only of one or two layers of plastic material. As such a tapping tee for barrier pipes must be securely attached , particularly when a captive cutter is employed.

The saddle body 116 is designed to be mounted to a pipe, forming a fluid tight connection and allowing for the flow of fluid between an inlet (not shown) and a branch connection 112 which provides a pathway for fluid to be diverted from the main flow. The saddle body 116 is designed with an exterior shape that complements the external curvature of various diameters of pipe (not shown in this figure) and is constructed from a material suitable for the intended application, such as metal, plastic, or a composite material.

The branch connection 112 is connected to the saddle body at the tapping point. The branch connection 112 features an attachment portion designed to fit securely onto the saddle body and a threaded portion for connecting the branch outlet to additional components or pipelines. The branch outlet may be constructed from the same material as the saddle body or any other appropriate material, depending on the intended application.

The attachment mechanism is formed of several parts, designed to form a long lasting seal between the tapping tee and the pipe to ensure leak-free connections between the saddle body, branch connection, and the target pipeline. The attachment mechanism comprises:
i) the free pin 110 which can rotate freely relative to the saddle body 116, and which forms the connection between the strap 102 and the saddle body 116. The skilled person will understand that this is merely one possible means of attaching the strap 102 to the saddle body and other means exist including direct attachment such as by welding, riveting, adhering etc the strap 102 to the saddle body 116.
ii) the strap 102 is the elongate portion of the attachment mechanism which is preferably flexible enough to be manipulated by hand and rugged enough to remain in harsh conditions for up to 50 years. The strap 102 is attached to the free pin 110 and can rotate about the free pin. The strap 102 may be formed of metal such as steel, stainless steel, aluminium or any other appropriate material.
iii) the pin comprising a slot 104 which in the example shown is attached to the saddle body 116 by a one way clutch 118 located within the saddle body 116 and a head 106. The head 106 and the pin comprising a slot 104 are in mechanical contact or one piece such that a tool used to rotate the head 106 also causes the pin comprising a slot 104 to rotate. The one way clutch 118 prevents the pin from rotating in one direction, such that the pin comprising a slot 104 is always rotated in the correct direction. In the example shown, the strap 102 has been inserted into the slot of the pin and the pin has been rotated counterclockwise such that the strap 102 neatly folds back on itself. Locking means 108a, 108b are used to clamp, tighten, or otherwise prevent the pin 104 from any further movement after the tapping tee 100 has been placed in position on the pipeline.

The present invention may use a needle clutch bearing also known as a needle roller clutch or a one-way needle bearing as the one way clutch. A needle clutch bearing is a specialized type of bearing that allows rotation in one direction while preventing it in the opposite direction. Alternatively, the one-way clutch may be a ratchet mechanism, which prevents rotation in the wrong direction during and after fitting.

The tapping tee 100 includes a captive cutter 114. Captive cutter 114 refers to a cutting tool used in the installation of tapping tees or saddle fittings on pipelines, specifically designed to create a hole in the main pipe while remaining attached to the tapping equipment throughout the operation. The term "captive" refers to the fact that the cutter is securely retained within the tapping equipment, ensuring that it does not separate from the assembly and fall into the pipeline during the cutting process. Captive cutters are typically used with tapping machines or drilling devices or hand tools that are designed for tapping into pressurized pipelines. They are available in various sizes and materials to accommodate different pipe sizes, materials, and operating conditions. By using a captive cutter, the risk of debris or loose parts entering the pipeline system is minimized, ensuring a safer and more reliable tapping process.

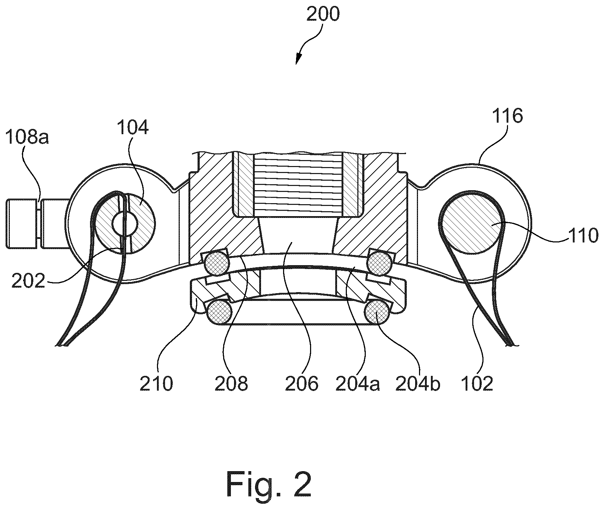

FIG. 2 shows a cut away view of a portion of the tapping tee 100. The cut-away portion of the tapping tee shows the interior of the tapping tee, including inlet 206 which, when connected to a main pipe, provides a fluid connection with the branch connection (not shown). The seat 208 is curved to match or accommodate various diameter pipes and includes a gasket 204a which, in the example shown, is partially recessed within the seat 208. Gasket refers generally to a sealing element such as an O-ring used to create a leak-proof seal between the tapping tee's saddle body (or tapping saddle) and the main pipe. Gaskets are used to prevent fluid or gas leaks at the connection point and maintaining the integrity of the pipeline system. Gaskets for tapping tees are typically made from elastomeric materials, such as rubber, which have the ability to deform under pressure and conform to the surfaces of the main pipe and the saddle body. This ensures a tight seal and compensates for any irregularities or surface imperfections. In the saddle body, there is often a groove or recess where the gasket is placed. When the tapping tee is installed on the main pipe, the gasket is compressed between the saddle body and the pipe, forming a secure and leak-proof seal. The gasket 204a used in the example shown is in the form of an O-ring which forms a fluid tight seal between the inlet 206 and the main pipe (not shown).

Additionally, FIG. 2 shows a cut through section of the pin comprising a slot 104 with the slot 202 visible and the strap 102 shown in position, passing through the slot 202 and turned back on itself to prevent the strap becoming loose. The locking means 108a can be tightened when the strap is in this position, such that the pin comprising a slot 104 cannot rotate in either direction. The free pin 110 attaches the strap 102 to the saddle body 116. In the example shown, the strap 102 attaches to itself and is looped around the free pin 110 such that it cannot become detached. The skilled person will understand that there are various means which could replace the free pin 110 to achieve the same effect of attaching the strap 102 to the saddle body 116.

Additionally, FIG. 2 shows an optional curved adapter 210 and optional second gasket 204b. The curved adapter 210 can be attached to the seat 208 to adapt the radius of curvature of the seat for fitting to smaller pipes, for example pipes with a radius of 63mm - 90mm. In examples with the curved adapter, the gasket 204a is a first gasket which maintains a seal between the curved adapter 210 and the saddle body 116. The curved adapter 210 may push fit onto the saddle body 116 with an interference fit, received by a groove or grooves within the saddle body. When the curved adapter 210 is used, an additional gasket 204b is present to maintain the seal between the curved adapter 210 and the pipe.

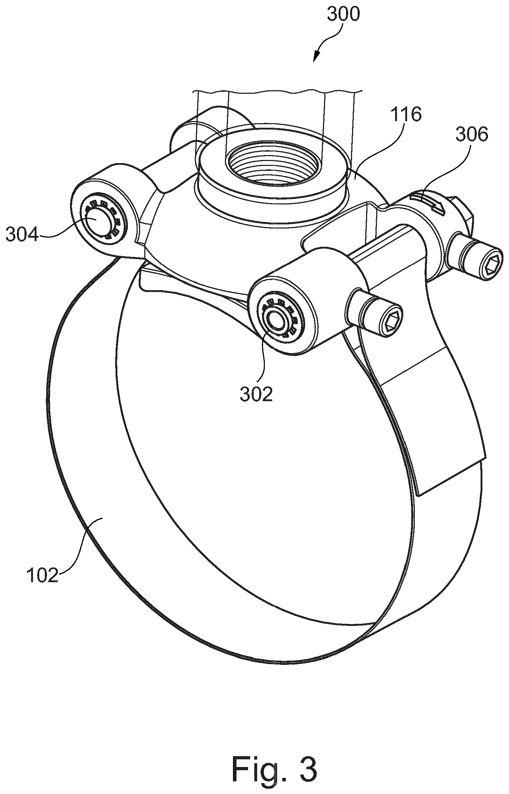

FIG. 3 shows a further view of the tapping tee 300. The further view shows a first push fastener 302 and a second push fastener 304 which are used to retain the pin comprising a slot 104 and free pin 110 in position relative to the saddle body 116, allowing rotation of the pins but preventing sliding movement away from the saddle body 116. Additionally, the saddle body 116 includes an indicator arrow 306 which provides a visually indicator to an operative for which direction to turn the head 106 to tighten the strap after the strap has been inserted through the slot 202. It can be seen that there is some excess strap remaining which is neatly tucked away close to strap. This excess strap length allows the tapping tee 100 to be fitted to a variety of different diameters of pipe.

The strap 102 or the pin comprising a slot 104 or the free pin 110 may include a torque indicator (not shown). A torque indicator refers to any feature or device that provides a visual or tactile indication when a predetermined level of torque or tension is achieved during tightening or installation. Torque indicators are used to ensure that the strap, clamp, or fastener is tightened to the correct degree, providing a secure and reliable connection while preventing over-tightening that could potentially damage the components or cause them to fail. In some examples, a torque wrench can be used to apply the correct torque when installing the tapping tee.

It should be noted that the drawings are not necessarily to scale and that certain features may be exaggerated or omitted in order to more clearly illustrate the inventive aspects disclosed herein. The specific embodiments depicted in the drawings are provided for illustrative purposes only and should not be considered as limiting the scope of the invention. The present invention may be embodied in various configurations and modifications that will be apparent to those skilled in the art, without departing from the invention as defined by the appended claims.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments.

The reader's attention is directed to all papers and documents which are filed concurrently with or previous to this specification in connection with this application and which are open to public inspection with this specification, and the contents of all such papers and documents are incorporated herein by reference.

## Claims

1. A tapping tee (100) comprising:
a tapping tee saddle comprising a saddle body (116) comprising a seat (208), a gasket (204a) attached to said seat (208);
an attachment mechanism, the attachment mechanism comprising:
a strap (102) attached to said saddle body (116);
a pin comprising a slot (104), the slot constructed to accept the strap (102), wherein said pin can rotate relative to said saddle body;
wherein said tapping tee further comprises a captive cutter (114).

2. The tapping tee (100) of claim 1 wherein the seat (208) is curved for fitting to a cylindrical pipe.

3. The tapping tee (100) of claim 1 or claim 2 wherein said strap (102) is formed of metal.

4. The tapping tee (100) of any one of claims 1 to 3 wherein said pin (104) can only be rotated in one direction.

5. The tapping tee (100) of any one of claims 1 to 4 wherein said pin (104) further comprises a head (106) configured to be manipulated by a tool.

6. The tapping tee (100) of any one of claims 1 to 5 wherein the pin (104) is attached to a one way clutch (118) and optionally wherein the one way clutch is a needle clutch bearing or a ratchet.

7. The tapping tee (100) of any one of claims 1 to 6 wherein the attachment mechanism comprises a torque indicator which indicates the amount of force applied to said strap.

8. The tapping tee (100) of any one of claims 1 to 7 further comprising locking means (108a, 108b) for locking the pin (104) comprising a slot such that it cannot rotate.

9. The tapping tee (100) of any one of claims 1 to 8 further comprising a curved adaptor (210) configured to attach to said seat (208), wherein said curved adapter has a smaller radius of curvature than said seat.

10. The tapping tee (100) of any one of claims 1 to 9 wherein the seat comprises a gasket (204a) partially recessed within the seat.

11. The tapping tee (100) of any one of claims 1 to 10, further comprising a branch connection.

12. The tapping tee (100) of any of claims 1 to **11** wherein said tapping tee further comprises a guide hole for a drill bit or hand tool.

13. A method of installing a tapping tee (100) to a pipe, the method comprising:
providing a tapping tee according to any one of claims 1 to 12;
placing the seat (208) onto the pipe;
arranging said strap (102) about said pipe and inserting an end of said strap into said slot of the pin comprising a slot;
rotating said pin (104) such that the tension of the strap increases and optionally further comprising cutting into said pipe to form a fluid connection between said pipe and said branch connection
and optionally wherein said pipe is a barrier pipe
and optionally comprising locking the pin comprising a slot such that it cannot rotate.

## Patentansprüche

1. Anbohr-T-Stück (100), umfassend:
einen Anbohr-T-Stück-Sattel, der einen Sattelkörper (116) umfasst, der einen Sitz (208), eine Dichtung (204a), die an dem Sitz (208) befestigt ist, umfasst;
einen Befestigungsmechanismus, wobei der Befestigungsmechanismus Folgendes umfasst:
ein Band (102), das an dem Sattelkörper (116) befestigt ist;
einen Stift, der einen Schlitz (104) umfasst, wobei der Schlitz so konstruiert ist, dass er das Band (102) aufnimmt, wobei sich der Stift relativ zu dem Sattelkörper drehen kann;
wobei das Anbohr-T-Stück ferner eine unverlierbare Schneidvorrichtung (114) umfasst.

2. Anbohr-T-Stück (100) nach Anspruch 1, wobei der Sitz (208) zum Anbringen an einem zylindrischen Rohr gekrümmt ist.

3. Anbohr-T-Stück (100) nach Anspruch 1 oder Anspruch 2, wobei das Band (102) aus Metall gebildet ist.

4. Anbohr-T-Stück (100) nach einem der Ansprüche 1 bis 3, wobei der Stift (104) nur in eine Richtung gedreht werden kann.

5. Anbohr-T-Stück (100) nach einem der Ansprüche 1 bis 4, wobei der Stift (104) ferner einen Kopf (106) umfasst, der dazu konfiguriert ist, durch ein Werkzeug gehandhabt zu werden.

6. Anbohr-T-Stück (100) nach einem der Ansprüche 1 bis 5, wobei der Stift (104) an einer Einwegkupplung (118) befestigt ist und optional wobei die Einwegkupplung ein Nadelkupplungslager oder eine Sperrklinke ist.

7. Anbohr-T-Stück (100) nach einem der Ansprüche 1 bis 6, wobei der Befestigungsmechanismus einen Drehmomentindikator umfasst, der den Betrag der auf das Band ausgeübten Kraft angibt.

8. Anbohr-T-Stück (100) nach einem der Ansprüche 1 bis 7, ferner umfassend Verriegelungsmittel (108a, 108b) zum Verriegeln des Stifts (104), der einen Schlitz umfasst, sodass er sich nicht drehen kann.

9. Anbohr-T-Stück (100) nach einem der Ansprüche 1 bis 8, ferner umfassend einen gekrümmten Adapter (210), der dazu konfiguriert ist, an dem Sitz (208) befestigt zu sein, wobei der gekrümmte Adapter einen kleineren Krümmungsradius als der Sitz aufweist.

10. Anbohr-T-Stück (100) nach einem der Ansprüche 1 bis 9, wobei der Sitz eine Dichtung (204a) umfasst, die teilweise in dem Sitz versenkt ist.

11. Anbohr-T-Stück (100) nach einem der Ansprüche 1 bis 10, ferner umfassend eine Abzweigverbindung.

12. Anbohr-T-Stück (100) nach einem der Ansprüche 1 bis 11, wobei das Anbohr-T-Stück ferner ein Führungsloch für einen Bohrer oder ein Handwerkzeug umfasst.

13. Verfahren zum Installieren eines Anbohr-T-Stücks (100) an einem Rohr, wobei das Verfahren Folgendes umfasst:
Bereitstellen eines Anbohr-T-Stücks nach einem der Ansprüche 1 bis 12;
Platzieren des Sitzes (208) auf dem Rohr;
Anordnen des Bands (102) um das Rohr und Einführen eines Endes des Bands in den Schlitz des Stifts, der einen Schlitz umfasst;
Drehen des Stifts (104), so dass die Spannung des Bandes zunimmt, und optional ferner umfassend das Schneiden in das Rohr, um eine Fluidverbindung zwischen dem Rohr und der Abzweigverbindung zu bilden,
und optional wobei das Rohr ein Sperrrohr ist
und optional umfassend das Verriegeln des Stifts, der einen Schlitz umfasst, sodass er sich nicht drehen kann.

## Revendications

1. Collier de prise (100), comprenant :
une sellette de collier de prise comprenant un corps de sellette (116) comprenant un siège (208), un joint (204a) fixé audit siège (208) ;
un mécanisme de fixation, le mécanisme de fixation comprenant :
une sangle (102) attachée audit corps de sellette (116) ;
une goupille comprenant une fente (104), la fente étant construite de manière à recevoir la sangle (102),
ladite goupille pouvant tourner par rapport audit corps de sellette ;
ledit collier de prise comprenant en outre un dispositif de découpe captif (114).

2. Collier de prise (100) selon la revendication 1, ledit siège (208) étant incurvé de manière à s'adapter à un tuyau cylindrique.

3. Collier de prise (100) selon la revendication 1 ou la revendication 2, ladite sangle (102) étant constituée de métal.

4. Collier de prise (100) selon l'une quelconque des revendications 1 à 3, ladite goupille (104) ne pouvant être tournée que dans un sens.

5. Collier de prise (100) selon l'une quelconque des revendications 1 à 4, ladite goupille (104) comprenant en outre une tête (106) conçue pour être manipulée par un outil.

6. Collier de prise (100) selon l'une quelconque des revendications 1 à 5, ladite goupille (104) étant fixée à un embrayage unidirectionnel (118) et éventuellement ledit embrayage unidirectionnel étant un roulement d'embrayage à aiguille ou un cliquet.

7. Collier de prise (100) selon l'une quelconque des revendications 1 à 6, ledit mécanisme de fixation comprenant un indicateur de couple qui indique la quantité de force appliquée à ladite sangle.

8. Collier de prise (100) selon l'une quelconque des revendications 1 à 7, comprenant en outre des moyens de verrouillage (108a, 108b) pour verrouiller la goupille (104) comprenant une fente de sorte qu'elle ne puisse pas tourner.

9. Collier de prise (100) selon l'une quelconque des revendications 1 à 8, comprenant en outre un adaptateur incurvé (210) conçu pour se fixer audit siège (208), ledit adaptateur incurvé comportant un rayon de courbure plus petit que celui dudit siège.

10. Collier de prise (100) selon l'une quelconque des revendications 1 à 9, ledit siège comprenant un joint (204a) partiellement encastré à l'intérieur du siège.

11. Collier de prise (100) selon l'une quelconque des revendications 1 à 10, comprenant en outre un raccord de dérivation.

12. Collier de prise (100) selon l'une quelconque des revendications 1 à 11, ledit collier de prise comprenant en outre un trou de guidage pour un foret ou un outil à main.

13. Procédé d'installation d'un collier de prise (100) sur un tuyau, le procédé comprenant :
la fourniture d'un collier de prise selon l'une quelconque des revendications 1 à 12 ;
le placement du siège (208) sur le tuyau ;
la disposition de ladite sangle (102) autour dudit tuyau et l'insertion d'une extrémité de ladite sangle dans ladite fente de la goupille comprenant une fente ;
la rotation de ladite goupille (104) de sorte que la tension de la sangle augmente et comprenant en outre éventuellement la découpe dans ledit tuyau de manière à former un raccordement fluidique entre ledit tuyau et ledit raccord de dérivation
et éventuellement ledit tuyau étant un tuyau à barrière
et comprenant éventuellement le verrouillage de la goupille comprenant une fente de sorte qu'elle ne puisse pas tourner.
